# EUROPEAN PATENT APPLICATION

(11) **EP 0 558 953 A2**
(43) Date of publication of application: **08.09.1993**
(21) Application number: 93101849.3
(22) Date of filing: 05.02.1993
(51) Int. Cl.: G06F 15/80

(54) **Neural device**

(30) Priority: 06.03.1992 JP 84544/92
(71) Applicant: YOZAN INC., Tokyo 155 (JP)
(72) Inventor: Yang, Weikang, Tokyo 112 (JP)
(74) Representative: Grünecker, Kinkeldey, Stockmair & Schwanhäusser Anwaltssozietät

(57) **Abstract**

It purposes to provide a neural device that is able to adapt to a composition of wide neural network while setting a plural number of processor elements in LSI.

A neural device of this invention comprises a plural number of processor elements including a plural number of input lines and a single number of output line and a local bus whose processor element connects a plural number of corresponding conductors and output lines, each conductor receives one of output lines, and all of input lines of each processor element is connected to the each conductor through a switch element, and the processor element outputs from output line integrated result of weighted signal input from said input line, and the switch element switches ON or OFF by a status signal from outside.

## Description

### FIELD OF THE INVENTION

This invention relates to a neural device, especially to that comprising a plural number of processor elements which output the weighted integrated results of a signal input from an input line connects these processor elements through local bus.

### BACKGROUND OF THE INVENTION

When a hardware realizes neural network modeling neurons of an organism, loss of communication become large because the amount of information for communication among processor elements increases in the case that the high degree of parallel processing is applied with the large number of processor elements.

On the other hand, in order to accelerate the communication speed in keeping the degree of parallel processing, it is conceivable that a plural number of processor elements are set in a LSI, so as to execute communication in LSI. But it can not comply a large area of a network because the condition of connection is fixed between processor elements in LSI.

### SUMMARY OF THE INVENTION

This invention solves the above mentioned conventional problems, and has an object to provide a neural device that is able to adapt to a composition of wide neural network while setting a plural number of processor elements in LSI.

The neural device relating to this invention sets a local bus in LSI; The local bus sets a plural number of conductor Lc arranged in parallel corresponding to the output line of each processor element, connects one of the output lines to each conductor, and connects all the input lines of each processor element to each conductor through the switch element.

According to the above description of this invention, it is possible to adapt to the wide neural network while setting a plural number of processor elements in a LSI.

### BRIEF DESCRIPTION OF THE DRAWINGS

Figure 1 is a block diagram showing an embodiment of neural device relating to this invention.

Figure 2 is a block diagram showing details of switch element in the embodiment in Figure 1.

Figure 3 is a block diagram showing another embodiment of switch element.

### PREFERRED EMBODIMENT OF THE PRESENT INVENTION

Hereinafter an embodiment of the neural device according to this invention is explained with reference to the attached drawings.

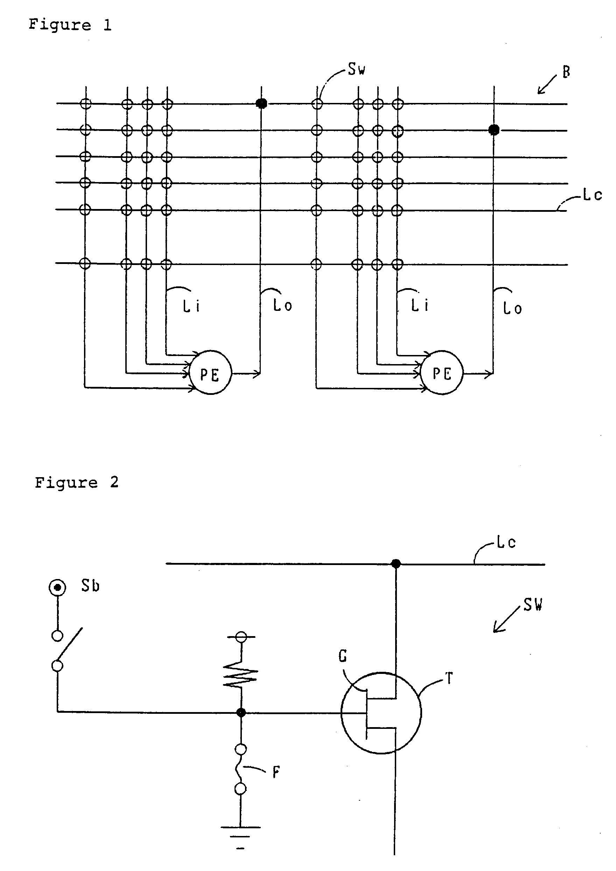

Neural device connects a plural number of processor elements PE through local bus B, and is composed of these processor elements and local bus in a LSI as in Figure 1.

Processor element PE has a plural number of input lines Li and a single number of input line Lo, and outputs from output line Lo the results integrated input data from input line Li. This integration is completed by multiplying weight to input data and transforming the result according to the predetermined function. Sigmoid function S( ) can be used.

$\text{Y = S ( ΣXiWi + Θ )}$

- Y: : output
- Xi: : i-th input
- Wi: : i-th weight
- Θ: : offset
Output line Lo of each processor element PE is connected with one of the conductors in local bus B, and input through the conductor into the other processor element PE. To realize free connection among processor elements, input line of each processor element PE is connected to all conductors Lc through switch element SW and connected with a conductor according to ON/OFF of switch element.

Figure 2 shows that a switch element SW has transistor T whose gate G is impressed voltage and fuse F for grounding the gate. The switch element SW turns off when this fuse F is fused. At the beginning stage, fuse F connects power, and fuse F is fused when the condition of connection inside of neural device is set. There are some methods for fusion: one of them connects power source Sb with fuse F for fusing through switch SWb; another one of them impresses minus voltage on conductor Lc, leads electric current from gate G of a transistor, and fuses fuse F.

By controlling the switch element ON/OFF, connecting condition of processor element PE is set as intended. ON/OFF is controlled by the status signal from the outside of LSI. A status signal is once registered in a LSI, and fuse F is fused according to the status signal after the registration of the status signal.

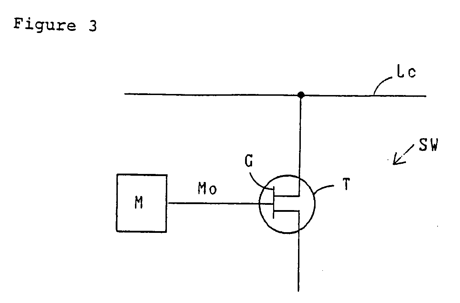

Figure 3 shows the another embodiment of switch element SW. This switch element SW connects the output Mo of memory cell M to the gate G of transistor T. The switch element SW is ON when the output of memory cell is in high level. Status signal is input to memory cell M from outside of LSI, and an output for each switch element is set according to this status signal. By storing a status signal in a memory cell, the connecting condition of processor element can be changed as intended by changing status signal.

A neural device relating to this invention sets a local bus in LSI; the local bus sets a plural number of conductor Lc arranged in prallel corresponding to the output line of each processor element, connects one of the output line to each conductor, and connects all the input lines of each processor element to each conductor through the switch element. Therefore it has a superior effect to adapt to wide nural structure as well as setting a plural number of processor elements in a LSI.

## Claims

1. A neural device comprising a plural number of processor elements including a plural number of input lines and a single number of output line and a local bus whereof processor element connects a plural number of corresponding conductors and output lines, each conductor receives one of output lines, and all of input lines of each processor element is connected to said each conductor through a switch element, wherein said processor element outputs from output line integrated result of weighted signal input from said input line, and said switch element switches ON or OFF by a status signal from outside.

2. A neural device as in Claim 1, wherein said switch element comprises a transistor impressed voltage in its gate and a fuse for grounding said gate, and is set OFF by fusing said fuse according to said status signal.

3. A neural device as in Claim 2, wherein said switch element connects power source in switchable manner for fusing said fuse.

4. A neural device as in Claim 3, wherein a power source is connected to said local bus in switchable manner for impressing minus voltage on emitter of transistor through said conductor of local bus.

5. A neural device as in Claim 1, wherein said switch element comprises a transistor and a RAM common to a plural number of switch elements for storing status signal, each bit of which is connected to said gate said transistor, and said switch element turns ON by high level bit of said status signal.
